# EUROPEAN PATENT SPECIFICATION

(11) **EP 4 013 530 B1**
(45) Date of publication and mention of the grant of the patent: **08.07.2026**
(21) Application number: 20853260.6
(22) Date of filing: 12.08.2020
(51) Int. Cl.: B01D 37/00, B01L 3/00, G01N 1/40, G01N 1/34, B01D 37/02, B01D 65/04, G01N 1/00

(54) **METHODS FOR SAMPLE FILTRATION**
VERFAHREN ZUR PROBENFILTERUNG
PROCÉDÉS POUR LA FILTRATION D'ÉCHANTILLONS

(30) Priority: 13.08.2019 US 201962886299 P
(43) Date of publication of application: 22.06.2022
(73) Proprietor: Dropworks, Inc., Boulder, Colorado 80301 (US)
(72) Inventor: HOLUB, Kristopher, Boulder, Colorado 80303 (US); DUNN, Matthew Ryan, Melrose, Massachusetts 02176 (US); LARSEN, Andrew Carl, Superior, Colorado 80027 (US)
(74) Representative: FRKelly
(86) International application number: PCT/US2020/046033
(87) International publication number: WO 2021/030507

(56) References cited:
- US-A- 3 463 320
- US-A1- 2006 192 039
- US-A1- 2012 071 643
- US-A1- 2016 353 920
- US-A1- 2017 106 129
- US-B2- 8 167 145
- YOON YOUSANG ET AL: "Clogging-free microfluidics for continuous size-based separation of microparticles", SCIENTIFIC REPORTS, vol. 6, no. 1, 20 May 2016 (2016-05-20), XP093070157, DOI: 10.1038/srep26531
- OLIVIER LIOT ET AL: "Pore cross-talk in colloidal filtration", ARXIV.ORG, CORNELL UNIVERSITY LIBRARY, 201 OLIN LIBRARY CORNELL UNIVERSITY ITHACA, NY 14853, 29 November 2017 (2017-11-29), XP081319982
- IRITANI EIJI ET AL: "Developments of Blocking Filtration Model in Membrane Filtration", KONA POWDER AND PARTICLE JOURNAL, vol. 33, no. 0, 1 January 2016 (2016-01-01), JP, pages 179 - 202, XP093070163, ISSN: 0288-4534, DOI: 10.14356/kona.2016024

## Description

### BACKGROUND OF THE INVENTION

There is an increasing demand in the area of analytical liquid handling for microfluidic devices capable of manipulating small to moderate sample volumes in a manner which is rapid, gives high recovery, is robust to fouling and clogging, and minimizes any possible sample-to-sample contamination. Among these attributes are low cost, ease of use, and suitability for application with microfluidic analytical liquid handling workflows, i.e. these solutions should not be a hindrance to the workflow of the user.

Yoon et al. (2016) relates to a lateral flow microfluidic sieving (µ-sieving) technique to overcome clogging and to allow continuous operation of filter based microfluidic separation.

### SUMMARY

The invention relates to a method according to claim 1 for providing a first filter element comprising (i) providing a first suspension of a plurality of first microparticles in a first liquid, wherein the first microparticles have a first hydrodynamic diameter of between 1 um and 1000 um; (ii) applying the first suspension to at least one non-circular opening with a short dimension and a long dimension, wherein the short dimension is less than the hydrodynamic diameter of the first microparticles, and the long dimension is at least 2X the hydrodynamic diameter of the first microparticles, so that the first microparticles accumulate and form a first filter element comprising the first microparticles at the opening, wherein the first suspension is applied to the at least one opening by flowing the first liquid into and through the opening. In certain embodiments the opening comprises an opening to a conduit leading to a processing system. In certain embodiments the method further comprises dispersing the first filter element formed in step (ii) by flowing a second liquid out of and through the opening to disperse the microparticles at the opening. In certain embodiments the method further comprises forming a second filter element by applying a second suspension of a plurality of second microparticles in a third liquid, wherein the second microparticles have a second hydrodynamic diameter of between 1um and 1000 um, to the at least one opening, wherein the short dimension of the opening is less than the hydrodynamic diameter of the second microparticles, and the long dimension of the opening is at least 2X the hydrodynamic diameter of the second microparticles,, to form a second filter element comprising the second microparticles at the opening. In certain embodiments the method further comprises dispersing the second filter element by flowing a fourth liquid out of and through the opening to disperse the microparticles at the constriction. In certain embodiments the first microparticles comprise a surface that adsorbs at least one component of the first liquid. In certain embodiments the first microparticles comprise a surface that does not bind nucleic acids. In certain embodiments the surface comprises a fluorinated surface. In certain embodiments the conduit comprises an inner fluorinated surface. In certain embodiments the first liquid comprises nucleic acid and the processing system comprises a polymerase chain reaction system. In certain embodiments the first microparticles are spherical or substantially spherical and the opening has a rectangular or substantially rectangular shape. In certain embodiments the method further comprises applying the first suspension of first microparticles to a plurality of openings, wherein the plurality of openings are all non-circular with a short dimension and a long dimension, wherein the short dimension is less than the hydrodynamic diameter of the first microparticles, and the long dimension is at least 2X the hydrodynamic diameter of the first particles.

The invention also relates to an apparatus according to claim 12 comprising (i) a plurality sample containers each of which comprises microparticles and a liquid in which the microparticles are suspended, wherein the microparticles have a hydrodynamic diameter of between 1 and 1000 um; (ii) a conduit having at least one non-circular opening with a short dimension and a long dimension, wherein the short dimension is less than the hydrodynamic diameter of the microparticles, and the long dimension is at least 2X the hydrodynamic diameter of the microparticles (iii) a system configured to sequentially immerse the opening or openings of the conduit in the plurality of sample containers; (iv) a system configured to flow the first liquid through the opening or openings into the conduit, so that the microparticles accumulate and form a filter element comprising the microparticles at the opening or openings of the conduit; and (v) a system configured to reverse flow of the first liquid through the opening or openings out of the conduit to disperse the microparticles at the opening or openings, or to flow a second liquid through the opening or openings out of the conduit to disperse the microparticles at the opening or openings. In certain embodiments the plurality of first microparticles have a diameter in the range of 10um to 100 um. In certain embodiments the first liquid is an aqueous liquid. In certain embodiments the microparticles are spherical or substantially spherical.

Also provided (not according to the invention) is a method of loading polymerase chain reaction (PCR) samples into a digital PCR analytical instrument comprising (i) providing a plurality of samples comprising nucleic acid in aqueous solution, wherein each sample further comprises a plurality of microparticles, and wherein the microparticles have a hydrodynamic diameter; (ii) placing a sample conduit into a first sample of the plurality of samples, wherein the conduit has an opening and wherein the opening has a critical dimension that is smaller than the hydrodynamic diameter of the microparticles in the first sample, and wherein the conduit is configured to be fluidly connected to the PCR analytical instrument; (iii) flowing the nucleic acid in aqueous solution of the first sample into the opening in the conduit and into the conduit, wherein the microparticles in the first sample cannot flow into the conduit and instead form a first filter element comprising one or microparticles at the opening of the conduit; (iv) after step (iii), flowing a liquid through the conduit and out of the opening of the conduit to remove the one or more microparticles from the first sample from the opening of the conduit and remove the first filter element; (v) placing the sample conduit into a second sample of the plurality of samples, wherein the second sample is different from the first sample, and flowing nucleic acid in aqueous solution of the second sample into the opening in the conduit and into the conduit wherein the microparticles in the second sample cannot flow into the conduit and instead form a second filter element, different from the first filter element, comprising one or microparticles at the opening of the conduit. The method may further comprise (vi) after step (v), flowing a liquid through the conduit and out of the opening of the conduit to remove the one or more microparticles from the second sample from the opening of the conduit and remove the second filter element. At least 10 different samples may be flowed into the conduit and into the PCR analytical instrument, forming and reversing at least 10 different filter elements. In certain embodiments at least 100 different samples are flowed into the conduit and into the PCR analytical instrument, forming and reversing at least 100 different filter elements. The microparticles may have a hydrodynamic diameter of 1um to 1000 um. The method may further comprise generating a plurality of partitions from the aqueous solution of the sample or samples.

### BRIEF DESCRIPTION OF THE DRAWINGS

The novel features compositions and methods are set forth with particularity in the appended claims. A better understanding of the features and advantages of the present compositions and methods will be obtained by reference to the following detailed description that sets forth illustrative embodiments, in which the principles of the compositions and methods are utilized, and the accompanying drawings of which:
**Figure 1** shows various stages in de novo filter formation.
**Figure 2** shows photomicrographs of various stages of de novo filter formation and of filter dispersal.
**Figure 3** shows an embodiment in which the opening in the sample conduit is a slit and the particles for filter formation are spheres.
**Figure 4** shows an embodiment in which the opening in the sample conduit is a slit and the particles for filter formation are spheres, and the long dimension of the slit is several multiples of the average sphere diameter.

### DETAILED DESCRIPTION

The methods and compositions disclosed herein relate to a method for filtering liquid solutions, and more particularly producing, on-demand, a microporous filter element comprising the steps of providing a liquid suspension of microparticles, applying the liquid suspension to a nozzle with a bore hole smaller than the particle size in suspension, drawing the liquid into the nozzle causing the formation of a microporous filter element at the bore hole of the nozzle until the flow is reversed disrupting the filter element. Typically, sample filtration for microfluidic applications can occur prior to or during use of the microfluidic device. The microparticles may be exogenous to the liquid solution, for example, microparticles added to or formed in a sample, such as an analytical sample.

Typically, in applications where filtration is performed prior to the use of the microfluidic device, liquid solutions are filtered with a suitable filtration unit using a pore size smaller than the smallest critical dimension in the microfluidic device to be used. This ensures that the liquid entering the device has been sufficiently cleared of debris and/or particulate that may impede the device's function, e.g., by clogging a pathway in the device. However, transfer of the filtered liquids from its storage container to a reservoir onboard the device, and other steps in the process, may lead to the introduction of material from many sources including but not limited to the new container's surface, the air, or the user during handling.

To overcome this challenge, a filtration unit is often integrated into the fluidic stream of the device allowing for continuous filtration during use. These filters may exist as an inline filter in the form of, e.g., disks, meshes, or frits or may be a structural feature constructed into the microfluidic device itself such as weir filters, pillar filters, crossflow filters, or membrane filters. A typical approach of this method is to use a microfluidic device outfitted with micro-fabricated pillars with defined spacing between each pillar in the array. The microfluidic pillars allow passage of liquid components with hydrodynamic diameters smaller than the pillar-to-pillar distance while trapping larger particulates that may disrupt the function of the device. However, as with all static filtration methods, this device is prone to rapid fouling as the trapped particulates accumulate, blocking part of the filter and reducing the number of open pores. This blockage effectively changes the hydrodynamic resistance across the fouled filter until the device is no longer usable. Additionally and even more problematic when working with multiple subsequent samples using the same microfluidic device, the filter-features and or clogged debris may effectively transfer sample constituents from previous samples to subsequent samples compromising sample integrity.

Therefore, most devices with integrated microfluidic plumbing tend to either require samples be prefiltered with a disposable single-use filtration unit or the microfluidic itself is a single use item requiring exchange between samples.

As a result, there is a need for a filtration strategy that does not require disposable microfluidic devices or sample prefiltration units for continuous use microfluidic instrumentation.

The methods and compositions disclosed herein allow for multiple sequential samples to be directed into a processing system, where the samples have been sufficiently filtered to avoid disrupting the function of the processing system, without the need to interrupt sampling, e.g., to replace or clean filters and the like, and with no or substantially no carryover from one sample to the next due to the filtration. The methods and compositions may allow at least 5, 10, 20, 30, 50, 100, 200, 500, 1000, 2000, or 5000 sequential samples to be directed to a processing system where the samples have been sufficiently filtered to avoid disrupting the function of the processing system, without the need to interrupt sampling, e.g., to replace or clean filters and the like, and with no or substantially no carryover of one sample to the next due to the filtration. This may be accomplished adding or forming exogenous microparticles in each sample, where the microparticles have a larger critical dimension, such as a larger diameter for spherical particles, than the largest dimension of a constriction (e.g., opening; in general, the terms "constriction" and "opening" are used synonymously herein unless otherwise indicated) in a sampling conduit that is used to move the sample from, e.g., its sample container, to the bulk of the processing system. The microparticles may be spherical or substantially spherical, and the constriction (e.g., opening) is non-circular, such as rectangular or roughly rectangular, with the diameter of the microparticles being larger than the short dimension of the non-circular constriction (opening), e.g. rectangle. The rectangular constriction may have a long dimension that is at least 1.5, 2, 2.5, 3, 3.5, 4, 4.5, 5, 6, 7, 8, 9, or 10x the short dimension. However, any suitable geometry of constriction may be used, so long as it is configured in such as way as to not allow microparticles through. The microparticles accumulate at the constriction, forming a de novo filter that keeps particles in the sample larger than the spaces between the microparticles from moving into the sampling conduit. Typically, between samples, flow in the conduit is reversed, to move all or substantially all of the microparticles from one sample away from the constriction of the conduit before it is placed in the next sample. The process is then repeated in the next sample. Thus, there is no need to replace filter elements, since a filter element is formed de novo in each sample and then removed before the next sample. There is also no or substantially no sample to sample cross-contamination from the de novo filter elements, because none or substantially none of the de novo filter element from one sample is carried over to the next sample. For example, on average, less than 5, 2, 1, 0.5, 0.1, 0.05, 0.01, 0.005, 0.001, 0.0005, or 0.0001% of de novo filter element (formed from, e.g., exogenously added or formed microparticles) from one sample is carried over to the next sample.

Thus, herein we disclose a dynamically formed filtration unit that is constructed at a predetermined location within or outside of a microfluidic tube, channel, or conduit by the accumulation of microparticles in the liquid solution at a constriction or orifice of critical dimension smaller than the microparticles. The accumulation of the microparticles at the constriction creates a micron-sized filtration unit that prevents particulate from transiting the filtration unit without impeding the entry of the liquid solution into the microfluidic device. After withdrawal of the required amount of the liquid solution, a back flush of any liquid solution of interest disrupts the microparticle filtration unit returning the device to its original state.

In it broadest aspect, the present invention relates to a method according to claim 1 for producing a filter element by generating a microporous element, comprising the steps of providing a liquid solution of microparticles, applying the liquid suspension to at least one constriction smaller than the hydrodynamic diameter of the microparticle in suspension, and causing accumulation of the microparticles at the constriction.

While the microparticles may comprise any suitable material, the material may be selected from the group consisting of resins, fluoropolymers, ceramics, metals, silicates and their derivatives, agarose, acrylamides, or the like.

In certain instances, the material of the surface of the microparticles is a material that does not interact, or does not substantially interact, with one or more components of interest in the material passing by the microparticles; e.g., one or more components of a sample, such as an aqueous sample, that is filtered by the de novo filter created by the microparticles. In samples in which nucleic acids are of interest, such material does not interact, or does not substantially interact, with nucleic acids. In samples in which proteins or peptides are of interest, such material does not interact, or does not substantially interact, with protein or peptides. In certain instances, the material comprises a fluorinated surface to prevent sample adsorption. Suitable resins include poly(tetrafluoroethylene) (PTFE) and alternative fluoropolymer resins or derivatized silica microparticles coated with a fluorinated surface.

In certain instances, the microparticles comprise a surface, e.g., are derivatized, to adsorb certain components from the liquid solution as the liquid solution passes through the microparticle aggregate while being inert or substantially inert to those molecules being analyzed in the device. For instance, in applications related to polymerase chain reaction, the microparticles may selectively bind to common blood-based PCR inhibitors like proteases, nucleases, and heme or soil-based inhibitors like humic acid, fulvic acid, polysaccharides, and polyphenols.

While the microfluidic tube, channel, or conduit may comprise any suitable material, preferable materials include silica, polyether ether ketone, polydimethylsiloxane, or fluoropolymer plastics.

In certain instances, the tube, channel, or conduit comprises a fluorinated surface to prevent sample adsorption. Suitable materials include tubes, channels, or conduits constructed from fluoropolymer materials like PTFE, PFA, or the like or silica chips coated derivatized with a fluorinated surface.

The microparticle size range from 1 um to 1000 um in diameter. In certain instances, the microparticle size may range from 1 um to 500 um, or 2 um to 500 um, or 2 um to 200 um, or 5 um to 500 um, or 5 um to 200 um in diameter. The range may be from 10 um to 100 um in hydrodynamic diameter. It will be appreciated that when the microparticles are spherical or substantially spherical, the hydrodynamic diameter and the actual diameter are equivalent.

The constriction, or the relevant dimension of the constriction, is of a size smaller, e.g., slightly smaller than the microparticle hydrodynamic diameter ensuring the microparticles do not pass through or embed themselves within the constriction. The relevant, or critical, dimension of the constriction (opening) is the dimension through which a microparticle must fit in order to pass through the constriction (opening). For example, in a circular constriction, the relevant or critical dimension is the diameter; for a rectangle, the relevant or critical dimension is the length of the short side. A similar analysis may be made for other shapes. The constriction (opening) may have a critical dimension from 1 um to 1000 um, or 1 um to 500 um, or 2 um to 500 um, or 2 um to 200 um, or 5 um to 500 um, or 5 um to 200 um in diameter. In certain instances, the range may be from 5 um to 95 um.

In certain instances, the microparticle may be of the same shape as the constriction in the microfluidic tube, channel, or conduit. In other instances, the microparticle may be of a different shape as the constriction. For example, if the microparticle is a spherical object and the constriction is aspherical, or vice versa, there exist a lower likelihood of constriction clogging by a complementary shape match of one of the microparticles in suspension.

In certain instances, the constriction in the microfluidic tube, channel, or conduit may be smaller than the constriction in only one (critical) dimension. For example, the constriction may take the form of an elongated slit with a short dimension smaller than the diameter of the microparticles in solution while the larger slit dimension may be of a size larger than one or more multiples of microparticles. For example, the larger dimension may be at least 1.5, 2, 2.5, 3, 3.5, 4, 4.5, 5, 6, 7, 8, 9, or 10x the short dimension. This example would limit the potential for constriction clogging.

In certain instances, the channel, conduit, or tubing may have multiple bore holes (openings, or constrictions as used herein) allowing fluid entry into the microfluidic device. When withdrawing microparticle suspensions into the microfluidic device, the fluid will enter into each fluidic inlet resulting in the generation of a plurality of microparticle aggregates. In the case of clogging of one or more of the fluidic inlets, the remaining unimpeded fluidic inlets allows continued function of the device. Additionally, the increased number of fluidic inlet may allow for increased total flow rates as compared to a single fluidic inlet. Thus, in certain embodiments, a plurality of constrictions (openings) are used, all of which have smaller critical dimensions than the microparticles, such as at least 2, 3, 4, 5, 6, 7, 8, 10, 12, 15, 20, 30, 40, 50, 75, or 100 constrictions (openings) and/or not more than 3, 4, 5, 6, 7, 8, 10, 12, 15, 20, 30, 40, 50, 75, 100, or 150 constrictions (openings).

In certain instances, microparticles may be attracted to the fluidic inlet through forces other than fluidic flow. Non-limiting examples of these may include magnetism and magnetic particles, electric fields and charged particles, dielectrophoretic fields and corresponding particles, and gravity and particle settling to the bottom of the vessel with the insertion of a tube into the particle bed.

In the case of analytical liquid handling of liquid samples, microparticles may either be part of the original sample, be added as an external reagent, or may be predeposited into a vessel and resuspend upon addition of sample to said vessel.

One nonlimiting instance of predisposition of microparticles into a vessel may be the formulation of a solution or suspension of microparticles in a carrier phase like sorbitol, addition of a predetermined volume of said sample to the vessel, and then lyophilization of the solvent till dry. The sugary matrix of microparticles effectively remains bound to vessel until dissolution by the solvated sample. Sorbitol is merely exemplary and it will be appreciated that any suitable carrier phase may be used, so long as it can be lyophilized and it does not interact, or substantially interact, with likely samples to be used in such a way as to alter their use in the processing system into which samples are introduced.

The microparticle filtration strategy may be utilized in the context of an analytical liquid handling system. Any analytical liquid handling system where the material of interest may be effectively size-filtered may find utility with these methods and compositions.

One nonlimiting example of an analytical liquid handling system is a digital PCR instrument. In this example, PCR samples are prepared by a liquid handling robot or a user, are injected into the analytical liquid handling system, are transformed into an emulsion using a droplet generator and a continuous phase carrier, such as a fluorinated oil carrier, are thermal cycled to conduct the PCR reaction, and are then passed through a detector to analyze the extent of the PCR reaction by any suitable means. In this example, each sample is passed through the same analytical liquid handling system requiring high levels of sample filtration and low levels of sample-to-sample contamination. The number of samples may range from 1 to many thousands.

Incorporation of the microparticle filtration strategy represents a large advance in the ease of use and robustness of the described digital PCR instrument. For example, a 2x concentrated PCR master mix may be formulated with the required concentration of microparticles. Upon one-to-one dilution with the required amount of sample, primers, and detection agents, the samples may be added to a 96-well plate and inserted into the digital PCR instrument. A sample injection tube with a bore hole smaller than the diameter of the microparticles in the PCR solution is dipped into the sample, the sample is withdrawn into the instrument forming the microparticle filter on the surface of the tube, and the sample is withdrawn into the instrument to perform digital PCR. After sample withdrawal, the sample injection tube is moved to a cleaning station where cleaning solution is dispensed through the tip effectively removing the microparticle filter, cleaning PCR material from the tube, effectively returning the sample injection tube to its original state before contacting the sample.

Provided is a method (not according to the invention) of loading polymerase chain reaction (PCR) samples into a PCR analytical instrument, such as a digital PCR instrument, comprising
(i) providing a plurality of samples comprising nucleic acid in aqueous solution, wherein each sample further comprises a plurality of microparticles, and wherein the microparticles have a hydrodynamic diameter; (ii) placing a sample conduit into a first sample of the plurality of samples, wherein the conduit has an opening (constriction) and wherein a critical dimension of the opening is smaller than the hydrodynamic diameter of the microparticles in the first sample, and wherein the conduit is configured to be fluidly connected to the PCR analytical instrument; (iii) flowing the nucleic acid in aqueous solution of the first sample into the opening in the conduit and into the conduit, wherein the microparticles in the first sample cannot flow into the conduit and instead form a first filter element comprising one or microparticles at the opening of the conduit. The opening (constriction) may be any suitable shape. The opening may be circular or substantially circular and the critical dimension is the diameter. The opening may be rectangular or substantially rectangular, and the critical dimension is the length of the short side of the rectangle; in such cases, the length of the long side of the rectangle may be any suitable length, such as at least 1.5, 2, 2.5, 3, 3.5, 4, 5, 6, 7, 8, 9, 10, 12, 15, or 20 times the length of the short side. The method may include (iv) after step (iii), flowing a liquid through the conduit and out of the opening of the conduit to remove the one or more microparticles from the first sample from the opening of the conduit and remove the first filter element; for example, by introducing a fluid into the conduit away from the opening and flowing the fluid through the conduit and out the opening, thus displacing the microparticles. In some cases, the conduit remains in the sample container from which sample was removed and the fluid flowing through enters the container; in some cases, the conduit is moved to another container, e.g., a waste container, and fluid flowing through enters the other container. The method can also include (v) placing the sample conduit into a second sample of the plurality of samples, wherein the second sample is different from the first sample, and flowing nucleic acid in aqueous solution of the second sample into the opening in the conduit and into the conduit wherein the microparticles in the second sample cannot flow into the conduit and instead form a second filter element, different from the first filter element, comprising one or microparticles at the opening of the conduit. This process can be repeated any suitable number of times, with a de novo filter of microparticles being formed at each sample, then dispersed after the sample or a portion of the sample has been moved into the PCR instrument, without the need to perform any additional steps for filtration, e.g., without the need to add or change filters (in the conventional sense) during the process; for example, sampling at least 2, 3, 4, 5, 7, 10, 12, 15, 20, 30, 40, 50, 60, 70, 80, 90, 100, 120, 150, 200, 300, 400, 500, 600, 700, 800, 900, or 1000 samples without interruption to add new or cleaned filter elements (beyond that need to form and disperse de novo filters) and/or not more than 3, 4, 5, 7, 10, 12, 15, 20, 30, 40, 50, 60, 70, 80, 90, 100, 120, 150, 200, 300, 400, 500, 600, 700, 800, 900, 1000, 1500, 2000, 3000, 4000, 5000 without interruption to add new or cleaned filter elements (beyond that need to form and disperse de novo filters). Instead, for each sample, a new filter element is formed then reversed. The microparticles have any suitable dimensions, so long as they can't pass through the opening or openings, such as dimensions described elsewhere herein, e.g., a hydrodynamic diameter of 1-1000 um. The microparticles can be any suitable shape, e.g., spherical or substantially spherical. Any suitable number of openings in the conduit may be used, such as a number described herein, e.g., 1-100 openings, or 1-10 openings, or 1-5 openings, or 2-100 openings, or 2-10 openings, or 2-5 openings, or 3-100 openings, or 3-10 openings, or 3-5 openings, or 5-100 openings, or 5-50 openings, or 5-10 openings, or 10-100 openings, or 10-50 openings.

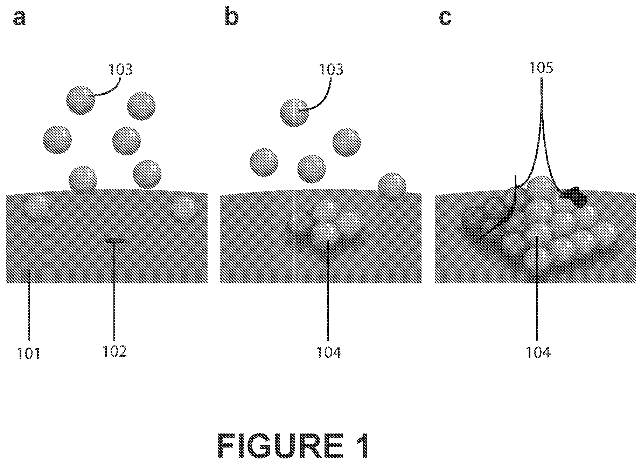

Figure 1 shows a substrate containing a channel, conduit, or orifice of a specific critical diameter (dimension). This substrate may be a microfluidic chip or tubing containing a microfluidic channel. A solution containing microparticles of a hydrodynamic diameter larger than the specific critical diameter of the channel or orifice in the substrate is withdrawn through the channel or orifice. As the solution is withdrawn, the microparticles begin to accumulate at the entry point. This accumulation of microparticles forms a matrix with pore holes of a size designated by the packing nature of the microparticles at the entry point. These pore holes are of a size significantly smaller than the entry point on the microfluidic substrate. The entry of particulate in said solution that may obstruct the function of said microfluidic device is prevented by the accumulated microparticle aggregate.

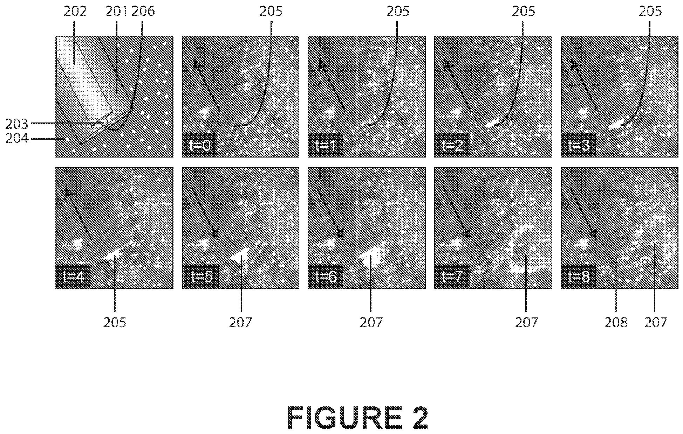

Figure 2 shows a test of one embodiment of the methods and compositions disclosed herein. A customized PFA tubing was prepared by inserting a 50 um metal wire into a 1/16" OD tubing with an inner diameter of 0.01" and heating. The PFA tubing upon heating softened and deformed around the metal wire. Upon removal of the metal wire, the tubing effectively had a 50 um diameter orifice. The customized tubing was attached to a syringe pump and then immersed in a prepared solution of suspended 53-63 um fluorescent polystyrene microspheres. The prepared solution was at a concentration of 0.1 g of microspheres dispersed in 10 mL of deionized water per the manufacturer's instructions. The tube and solution were placed under a fluorescent microscope under 40x magnification and imaged while withdrawing a at a rate of 100 uL/min. After a prescribed amount of time, the liquid flow was reversed. Select frames from the video were placed in chronological order. Arrows represent the velocity of liquid flow. At time t = 1 liquid withdrawal begins. At time t = 5, liquid reversal begins. The build-up of microparticles at the tubing bore hole is apparent over time as well as its immediate dispersal upon reversal of liquid flow.

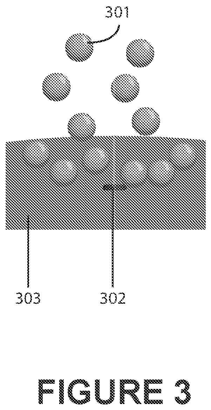

Figure 3 shows another embodiment of the methods and compositions disclosed herein. In certain instances, the microparticle may be of the same shape as the constriction. In other instances, the microparticle may be of a different shape as the constriction. For example, if the microparticle is a spherical object and the constriction is aspherical, or vice versa, there exist a lower likelihood of constriction clogging.

A liquid sample of spherical microparticles may be withdrawn into a non-circular microchannel with a critical diameter smaller than the microparticles in solution. As the microparticle solution is withdrawn into the non-circular channel, microparticles aggregate at the fluidic inlet. The mismatch in shape between the microparticles and the channel ensure that microparticles are not able to clog the fluidic inlet.

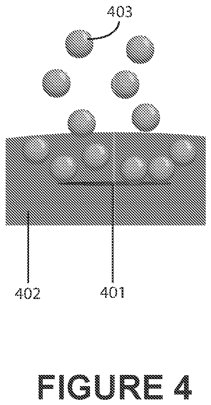

Figure 4 shows a further embodiment of the methods and compositions disclosed herein. In certain instances, the constriction may be smaller than the microparticles in only one critical dimension. For example, the constriction be formed through the generation of a slit with a short diameter smaller than the diameter of may the microparticles in solution while the larger slit dimension may be of a size larger than one or more multiples of microparticles. This example would limit the potential for constriction clogging prevent liquid flow through the constriction.

A liquid sample of spherical microparticles may be withdrawn into an elongated microchannel with a critical diameter (dimension) smaller than the microparticles in solution. The elongated microchannel is of a geometry that prevents microparticle entry but is large enough for multiple microparticles to span the entire inlet. As the microparticle solution is withdrawn into the elongated channel, microparticles aggregate at the fluidic inlet. The mismatch in shape between the microparticles and the channel ensure that microparticles are able to clog the fluidic inlet.

In certain embodiments, provided herein is a method for providing a first filter element comprising (i) providing a first suspension of a plurality of first microparticles in a first liquid, wherein the first microparticles have a first hydrodynamic diameter in any suitable range as described herein, such as between 1 um and 1000 um, or between 10 um and 100 um; (ii) applying the first suspension to at least one non-circular opening, such as an ellipse or substantially elliptical shape, or a rectangle or substantially rectangular shape, with a short dimension and a long dimension, where the short dimension is less than the hydrodynamic diameter of the first microparticles, and the long dimension is at least 2X the hydrodynamic diameter of the first particles, so that the first microparticles accumulate and form a first filter element comprising the first microparticles at the opening, wherein the first suspension is applied to the at least one opening by flowing the first liquid into and through the opening. The opening can be an opening to a conduit leading to an instrument, or configured to be positioned to lead to an instrument, for processing the liquid or components of the liquid that pass through the opening. The liquid can be passed through the opening by any suitable method, e.g., by flowing the liquid. In certain embodiments, the filter element formed in steps (ii) can be dispersed by passing a second liquid back out through the opening (e.g., reversing the direction of flow of fluid through the opening). The method can further comprise forming a second filter element by applying a second suspension of a plurality of second microparticles in a third liquid, wherein the second microparticles have a second hydrodynamic diameter in any suitable range as described herein, such as between 1 um and 1000 um, or between 10 um and 100 um, to the at least one opening, wherein the short dimension of the opening is less than the hydrodynamic diameter of the second microparticles, and the long dimension of the opening is at least 2X the hydrodynamic diameter of the second microparticles, to form a second filter element comprising the second microparticles at the opening. The second filter can, in some instances, then be dispersed similar to the first filter. Microparticles in each fluid may be any suitable shape; in certain instances, the microparticles are spherical or substantially spherical. The surface of some or all of the microparticles may be such that it capable of interacting with certain components of one or more of the liquids and/or does not interact, or does not substantially interact with other components. For example, in the case of liquid comprising nucleic acids to be analyzed, the microparticles can have surfaces that don't interact, or substantially interact, with the nucleic acids; the surfaces may further be capable of interact with other components, as described elsewhere herein. In some cases a plurality of openings is used, all with a critical dimension less than the hydrodynamic diameter of the particles.

In certain embodiments, provided herein is an apparatus comprising (i) a plurality sample containers each of which comprises microparticles and a liquid in which the microparticles are suspended, wherein the microparticles have any suitable hydrodynamic diameter between 1 and 1000 um, or between 10 and 100 um; (ii) a conduit having at least one non-circular opening with a short dimension and a long dimension, wherein the short dimension is less than the hydrodynamic diameter of the microparticles, and the long dimension is at least 2X the hydrodynamic diameter of the microparticles (iii) a system configured to sequentially immerse the opening or openings of the conduit in the plurality of sample containers, e.g., a sampling system such as a sampling system for a digital PCR instrument; (iv) a system configured to flow the liquid through the opening or openings into the conduit, such as a pump, so that the microparticles accumulate and form a filter element comprising the microparticles at the opening; and (v) a system configured to reverse flow of the first liquid through the opening or openings out of the conduit to disperse the microparticles at the opening or openings, or to flow a second liquid through the opening or openings out of the conduit to disperse the microparticles at the opening. Thus, the apparatus is configured to sequentially sample materials from the sample containers, forming a filter during each sampling and dispersing the filter after sampling is completed, and moving from container to container. Each filter may be dispersed back into the container from which sample was drawn, or into a different container, such as one or more waste containers.

## Claims

1. A method for providing a first filter element comprising:
(i) providing a first suspension comprising a plurality of first microparticles (103) in a first liquid, wherein the first microparticles have a first hydrodynamic diameter of between 1 µm and 1000 µm;
(ii) applying the first suspension to at least one non-circular opening (102) with a short dimension and a long dimension, wherein the short dimension is less than the hydrodynamic diameter of the first microparticles, and the long dimension is at least 2X the hydrodynamic diameter of the first microparticles, so that the first microparticles accumulate and form a first filter element comprising the first microparticles at the opening;
wherein the first suspension is applied to the at least one opening by flowing the first liquid into and through the opening.

2. The method of claim 1, wherein the opening is an opening to a conduit leading to a processing system.

3. The method of any of claim 1 or claim 2, further comprising:
(iii) dispersing the first filter element formed in step (ii) by (a) flowing a second liquid out of and through the opening to disperse the first microparticles at the opening or (b) reversing flow of the first liquid out of and through the opening to disperse the first microparticles at the opening.

4. The method of any of claims 1-3, further comprising forming a second filter element by applying a second suspension of a plurality of second microparticles in a third liquid, wherein the second microparticles have a second hydrodynamic diameter of between 1 µm and 1000 µm, to the at least one opening to form a second filter element comprising the second microparticles at the opening.

5. The method of claim 4, further comprising dispersing the second filter element by (a) flowing a fourth liquid out of and through the opening to disperse the second microparticles at the opening, or (b) reversing flow of the third liquid out of and through the opening to disperse the second microparticles at the opening.

6. The method of any of claims 1-5, wherein the first microparticles comprise a surface that adsorbs at least one component of the first liquid.

7. The method of any of claims 1-6, wherein the first microparticles comprise a surface that does not bind nucleic acids.

8. The method of any of claims 1-7, wherein the first microparticles comprise a fluorinated surface.

9. The method of any of claims 2-8, wherein the conduit comprises a fluorinated surface.

10. The method of any of claims 2-9, wherein the first liquid comprises nucleic acid and the processing system comprises a polymerase chain reaction system, optionally a digital polymerase chain reaction system.

11. The method of any of claims 1-10, wherein the first microparticles are spherical or substantially spherical and the opening has a rectangular or substantially rectangular shape.

12. An apparatus comprising:
(i) a plurality of sample containers each of which comprises microparticles (103) and a first liquid in which the microparticles are suspended, wherein the microparticles have a hydrodynamic diameter of between 1 and 1000 µm;
(ii) a conduit (202) having at least one non-circular opening (206) with a short dimension and a long dimension, wherein the short dimension is less than the hydrodynamic diameter of the microparticles, and the long dimension is at least 2X the hydrodynamic diameter of the microparticles;
(iii) a system configured to sequentially immerse the opening or openings of the conduit in the plurality of sample containers;
(iv) a system configured to flow the first liquid through the opening or openings into the conduit, so that the microparticles accumulate and form a filter element comprising the microparticles at the opening or openings of the conduit; and
(v) a system configured to reverse flow of the first liquid through the opening or openings out of the conduit to disperse the microparticles at the opening or openings, or to flow a second liquid through the opening or openings out of the conduit to disperse the microparticles at the opening or openings.

13. The apparatus of claim 12, wherein the microparticles have a diameter in the range of 10 µm to 100 µm.

14. The apparatus of claim 12 or 13, wherein the microparticles are spherical or substantially spherical.

## Patentansprüche

1. Verfahren zum Bereitstellen eines ersten Filterelements, umfassend:
(i) Bereitstellen einer ersten Suspension, umfassend eine Vielzahl von ersten Mikropartikeln (103) in einer ersten Flüssigkeit, wobei die ersten Mikropartikel einen ersten hydrodynamischen Durchmesser von zwischen 1 µm und 1000 µm aufweisen;
(ii) Anwenden der ersten Suspension auf mindestens eine nichtkreisförmige Öffnung (102) mit einer kurzen Abmessung und einer langen Abmessung, wobei die kurze Abmessung kleiner als der hydrodynamische Durchmesser der ersten Mikropartikel ist und die lange Abmessung mindestens das 2-Fache des hydrodynamischen Durchmessers der ersten Mikropartikel beträgt, so dass sich die ersten Mikropartikel ansammeln und ein erstes Filterelement, umfassend die ersten Mikropartikel, an der Öffnung bilden;
wobei die erste Suspension auf die mindestens eine Öffnung durch Leiten der ersten Flüssigkeit in die und durch die Öffnung angewendet wird.

2. Verfahren nach Anspruch 1, wobei die Öffnung eine Öffnung zu einer Leitung ist, die zu einem Verarbeitungssystem führt.

3. Verfahren nach einem der Ansprüche 1 oder 2, ferner umfassend: (iii) Dispergieren des in Schritt (ii) gebildeten ersten Filterelements durch (a) Leiten einer zweiten Flüssigkeit aus der und durch die Öffnung, um die ersten Mikropartikel an der Öffnung zu dispergieren, oder (b) Umkehren der Strömung der ersten Flüssigkeit aus der und durch die Öffnung, um die ersten Mikropartikel an der Öffnung zu dispergieren.

4. Verfahren nach einem der Ansprüche 1-3, ferner umfassend Bilden eines zweiten Filterelements durch Anwenden einer zweiten Suspension einer Vielzahl von zweiten Mikropartikeln in einer dritten Flüssigkeit, wobei die zweiten Mikropartikel einen zweiten hydrodynamischen Durchmesser von zwischen 1 µm und 1000 µm aufweisen, auf die mindestens eine Öffnung, um ein zweites Filterelement, umfassend die zweiten Mikropartikel, an der Öffnung zu bilden.

5. Verfahren nach Anspruch 4, ferner umfassend Dispergieren des zweiten Filterelements durch (a) Leiten einer vierten Flüssigkeit aus der und durch die Öffnung, um die zweiten Mikropartikel an der Öffnung zu dispergieren, oder (b) Umkehren der Strömung der dritten Flüssigkeit aus der und durch die Öffnung, um die zweiten Mikropartikel an der Öffnung zu dispergieren.

6. Verfahren nach einem der Ansprüche 1-5, wobei die ersten Mikropartikel eine Oberfläche umfassen, die mindestens einen Bestandteil der ersten Flüssigkeit adsorbiert.

7. Verfahren nach einem der Ansprüche 1-6, wobei die ersten Mikropartikel eine Oberfläche umfassen, die keine Nukleinsäuren bindet.

8. Verfahren nach einem der Ansprüche 1-7, wobei die ersten Mikropartikel eine fluorierte Oberfläche umfassen.

9. Verfahren nach einem der Ansprüche 2-8, wobei die Leitung eine fluorierte Oberfläche umfasst.

10. Verfahren nach einem der Ansprüche 2-9, wobei die erste Flüssigkeit Nukleinsäure umfasst und das Verarbeitungssystem ein Polymerasekettenreaktionssystem, wahlweise ein digitales Polymerasekettenreaktionssystem, umfasst.

11. Verfahren nach einem der Ansprüche 1-10, wobei die ersten Mikropartikel kugelförmig oder im Wesentlichen kugelförmig sind und die Öffnung eine rechteckige oder im Wesentlichen rechteckige Form aufweist.

12. Einrichtung, umfassend:
(i) eine Vielzahl von Probenbehältern, von denen jeder Mikropartikel (103) und eine erste Flüssigkeit, in der die Mikropartikel suspendiert sind, umfasst, wobei die Mikropartikel einen hydrodynamischen Durchmesser von zwischen 1 und 1000 µm aufweisen;
(ii) eine Leitung (202), aufweisend mindestens eine nichtkreisförmige Öffnung (206) mit einer kurzen Abmessung und einer langen Abmessung, wobei die kurze Abmessung kleiner als der hydrodynamische Durchmesser der Mikropartikel ist und die lange Abmessung mindestens das 2-Fache des hydrodynamischen Durchmessers der Mikropartikel beträgt;
(iii) ein System, konfiguriert zum sequenziellen Eintauchen der Öffnung oder Öffnungen der Leitung in die Vielzahl von Probenbehältern;
(iv) ein System, konfiguriert zum Leiten der ersten Flüssigkeit durch die Öffnung oder Öffnungen in die Leitung, so dass sich die Mikropartikel ansammeln und ein Filterelement, umfassend die Mikropartikel, an der Öffnung oder den Öffnungen der Leitung bilden; und
(v) ein System, konfiguriert zum Umkehren der Strömung der ersten Flüssigkeit durch die Öffnung oder Öffnungen aus der Leitung, um die Mikropartikel an der Öffnung oder den Öffnungen zu dispergieren, oder zum Leiten einer zweiten Flüssigkeit durch die Öffnung oder Öffnungen aus der Leitung, um die Mikropartikel an der Öffnung oder den Öffnungen zu dispergieren.

13. Einrichtung nach Anspruch 12, wobei die Mikropartikel einen Durchmesser im Bereich von 10 µm bis 100 µm aufweisen.

14. Einrichtung nach Anspruch 12 oder 13, wobei die Mikropartikel kugelförmig oder im Wesentlichen kugelförmig sind.

## Revendications

1. Procédé de mise à disposition d'un premier élément filtrant comprenant :
(i) la mise à disposition d'une première suspension comprenant une pluralité de premières microparticules (103) dans un premier liquide, dans lequel les premières microparticules ont un premier diamètre hydrodynamique compris entre 1 µm et 1 000 µm ;
(ii) l'application de la première suspension à au moins une ouverture non circulaire (102) avec une dimension courte et une dimension longue, dans lequel la dimension courte est inférieure au diamètre hydrodynamique des premières microparticules, et la dimension longue est au moins 2 fois le diamètre hydrodynamique des premières microparticules, de sorte que les premières microparticules s'accumulent et forment un premier élément filtrant comprenant les premières microparticules au niveau de l'ouverture ;
dans lequel la première suspension est appliquée à l'au moins une ouverture en faisant circuler le premier liquide dans et à travers l'ouverture.

2. Procédé selon la revendication 1, dans lequel l'ouverture est une ouverture vers un conduit menant à un système de traitement.

3. Procédé selon l'une quelconque de la revendication 1 ou de la revendication 2, comprenant en outre :
(iii) la dispersion du premier élément filtrant formé à l'étape (ii) en (a) faisant circuler un deuxième liquide hors et à travers l'ouverture pour disperser les premières microparticules au niveau de l'ouverture ou (b) en inversant le sens d'écoulement du premier liquide hors et à travers l'ouverture pour disperser les premières microparticules au niveau de l'ouverture.

4. Procédé selon l'une quelconque des revendications 1 à 3, comprenant en outre la formation d'un second élément filtrant en appliquant une seconde suspension d'une pluralité de secondes microparticules dans un troisième liquide, dans lequel les secondes microparticules ont un second diamètre hydrodynamique compris entre 1 µm et 1 000 µm, au niveau de l'au moins une ouverture pour former un second élément filtrant comprenant les secondes microparticules au niveau de l'ouverture.

5. Procédé selon la revendication 4, comprenant en outre la dispersion du second élément filtrant en (a) faisant circuler un quatrième liquide hors et à travers l'ouverture pour disperser les secondes microparticules au niveau de l'ouverture, ou (b) en inversant le sens d'écoulement du troisième liquide hors et à travers l'ouverture pour disperser les secondes microparticules au niveau de l'ouverture.

6. Procédé selon l'une quelconque des revendications 1 à 5, dans lequel les premières microparticules comprennent une surface qui adsorbe au moins un composant du premier liquide.

7. Procédé selon l'une quelconque des revendications 1 à 6, dans lequel les premières microparticules comprennent une surface qui ne se lie pas aux acides nucléiques.

8. Procédé selon l'une quelconque des revendications 1 à 7, dans lequel les premières microparticules comprennent une surface fluorée.

9. Procédé selon l'une quelconque des revendications 2 à 8, dans lequel le conduit comprend une surface fluorée.

10. Procédé selon l'une quelconque des revendications 2 à 9, dans lequel le premier liquide comprend un acide nucléique et le système de traitement comprend un système de réaction en chaîne par polymérase, éventuellement un système de réaction en chaîne par polymérase numérique.

11. Procédé selon l'une quelconque des revendications 1 à 10, dans lequel les premières microparticules sont sphériques ou sensiblement sphériques et l'ouverture a une forme rectangulaire ou sensiblement rectangulaire.

12. Appareil comprenant :
(i) une pluralité de récipients d'échantillons comprenant chacun des microparticules (103) et un premier liquide dans lequel les microparticules sont en suspension, dans lequel les microparticules ont un diamètre hydrodynamique compris entre 1 et 1 000 µm ;
(ii) un conduit (202) comportant au moins une ouverture non circulaire (206) avec une dimension courte et une dimension longue, dans lequel la dimension courte est inférieure au diamètre hydrodynamique des microparticules et la dimension longue est au moins 2 fois le diamètre hydrodynamique des microparticules ;
(iii) un système configuré pour immerger successivement l'ouverture ou les ouvertures du conduit dans la pluralité de récipients d'échantillons ;
(iv) un système configuré pour faire circuler le premier liquide à travers l'ouverture ou les ouvertures dans le conduit, de sorte que les microparticules s'accumulent et forment un élément filtrant comprenant les microparticules au niveau de l'ouverture ou des ouvertures du conduit ; et
(v) un système configuré pour inverser le sens d'écoulement du premier liquide à travers l'ouverture ou les ouvertures hors du conduit pour disperser les microparticules au niveau de l'ouverture ou des ouvertures, ou pour faire circuler un deuxième liquide à travers l'ouverture ou les ouvertures hors du conduit pour disperser les microparticules au niveau de l'ouverture ou des ouvertures.

13. Appareil selon la revendication 12, dans lequel les microparticules ont un diamètre compris dans la plage allant de 10 µm à 100 µm.

14. Appareil selon la revendication 12 ou 13, dans lequel les microparticules sont sphériques ou sensiblement sphériques.
